Europäisches Patentamt

European Patent Office

Office européen des brevets

(19)

(11) Numéro de publication: **0 262 551 B1**

(12) **FASCICULE DE BREVET EUROPEEN**

(45) Date de publication de fascicule du brevet:
20.03.91

(51) Int. Cl.⁵: **B60C 13/02**

(21) Numéro de dépôt: **87113800.4**

(22) Date de dépôt: **22.09.87**

(54) **Pneumatique à armature de carcasse radiale, ayant au moins une paroi latérale pourvue d'une nervure protectrice.**

(30) Priorité: **30.09.86 FR 8613723**

(43) Date de publication de la demande:
**06.04.88 Bulletin 88/14**

(45) Mention de la délivrance du brevet:
**20.03.91 Bulletin 91/12**

(84) Etats contractants désignés:
**AT BE CH DE ES FR GB GR IT LI LU NL SE**

(56) Documents cités:
**DE-A- 2 337 613**
**DE-A- 2 340 761**
**FR-A- 2 131 874**
**GB-A- 2 003 805**
**US-A- 4 120 337**

**PATENT ABSTRACTS OF JAPAN, vol. 10, no.**
**163 (M-487)[2219], 11 juin 1986; & JP-A-61 16**
**113 (SUMITOMO GOMU KOGYO K.K.)**
**24-01-1986**

(73) Titulaire: **MICHELIN & CIE (Compagnie Géné-**
**rale des Etablissements Michelin) Société**
**dite:**
**4 rue du Terrail**
**F-63000 Clermont-Ferrand(FR)**

(72) Inventeur: **Casanova, Philippe**
**39, rue Antoinette Begon**
**F-63000 Clermont-Ferrand(FR)**
Inventeur: **Lateulere, Jean-Louis**
**25, allée Paul Victor**
**F-63400 Chamalieres(FR)**

(74) Mandataire: **Renaudie, Jacques et al**
**Michelin & Cie Service K. Brevets**
**F-63040 Clermont-Ferrand Cédex(FR)**

## Description

L'invention converne les pneumatiques circulant hors route et destinés à équiper les engins de chargement, de terrassement et de transport, évoluant plus spécialement dans des carrières ou dans les mines souterraines. De tels pneumatiques ont une armature de carcasse radiale et une armature de sommet composée d'au moins deux nappes superposées de câbles formant avec la direction circonférentielle un angle aigu.

Les pneumatiques de l'espèce considérée travaillent sous de sévères conditions de charge et roulent sur des sols jonchés d'objects coupants (blocs de pierre à arêtes vives, objets métalliques...) le plus souvent en présence d'eau. Ces objets coupants sont la cause de l'initiation de nombreuses coupures ou griffures, non seulement sur la bande de roulement mais aussi sur les parois latérales ou flancs du pneumatique. Ces griffures se propagent plus ou moins rapidement en longueur et profondeur sous l'effet des flexions répétées subies par le pneumatique. En fonction de leur nombre, de leur profondeur et longueur initiales, de leur orientation, de la distance les séparant, elles peuvent soit atteindre après propagation l'armature de carcasse radiale avec, pour conséquence, une destruction plus ou moins rapide de cette armature, soit provoquer des arrachements multiples de caoutchouc avec, pour conséquence, une dégradation rapide des flancs.

La demanderesse, en vue de réduire les risques d'avaries sur les flancs d'un pneumatique a proposé, dans le brevet français 1 452 787, de munir la région du flanc proche de la bande de roulement, dite région épaule, d'un renflement en saillie par rapport à toutes les portions du flanc sous des conditions sévères de charge. La face radialement externe de ce renflement fait un angle de 70 ± 10 degrés avec la direction transversale, et la largeur axiale maximale du pneumatique est alors située à une distance h, mesurée à partir du sommet du pneumatique, égale à environ au quart de la hauteur total H du pneumatique.

De telles protubérances sont particulièrement efficaces contre la propagation des coupures dues à des roches faisant saillie sur la surface en contact avec le sol, ou sur les surfaces latérales ou parois des galeries souterraines.

Cependant, toutes les coupures étant pratiquement concentrées en nombre sur ces protubérances, celles-ci deviennent rapidement inefficaces du fait de leur destruction rapide par dégradation (usure, arrachement) et la distance d, différence entre la largeur axiale maximale et la largeur axiale nominale du pneumatique sous charge, devenant alors négative, n permet plus la protection du flanc au niveau de la largeur axiale nominale.

Il est aussi largement connu de protéger les flancs de pneumatiques, en particulier de pneumatiques équipant des véhicules appelés à effectuer des arrêts fréquents en bordure de trottoirs, de nervures protectrices ou bandeaux circonférentiels, comme montré par exemple dans le brevet français 2 131 874(correspondant au préamble de le revendication 1). Ces nervures, sensiblement situées à la mi flanc des pneumatiques résistent bien à l'usure par frottement. Par contre dans le cas d'un contact avec des objects coupants, ces nervures sont sujettes, du fait même de leur position, à de nombreuses coupures qui se propagent rapidement et rendent pratiquement caduque leur présence dans le cas de pneumatiques de l'espèce considérée par la présente invention.

Le but de la présente invention est donc de remédier aux inconvénients cités ci-dessus, et de donner au flanc du pneumatique de l'espèce considérée un profil axialement externe, minimisant d'une part l'initiation des griffures et d'autre part la vitesse de propagation des girffures initiées par le contact du pneumatique avec des objets coupants. Ce but est réalisé par les caractéristiques de la revendication 1.

De manière préférentielle, la hauteur $H_i$ de l'extrémité radialement inférieure est au moins égale à la hauteur $H_E$, correspondante à la plus grande largeur axiale de l'armature de carcasse, la nervure étant alors située au dessus de l'axe de plus grande largeur axiale.

La bande de roulement d'un tel pneumatique peut être ou non pourvue de rainures, et en particulier de rainures transversales et obliques débouchant sur les faces latérales du pneumatique dans la région des épaules. De manière préférentielle, la bande de roulement est dépourvue de toute rainure, ce qui permet, dans le cas d'une utilisation sévère du pneumatique une amélioration notable de la tenue à la dégradation des flancs par arrachements de morceaux de caoutchouc. Si la présence de rainures est nécessaire, de manière avantageuse, la profondeur de ces rainures, mesurée au niveau de la face latérale, n'est pas supérieure à la longueur de la portion rectiligne de la face latérale supérieure du flanc, afin d'éviter une concentration de contraintes au fond des rainures, concentration pouvant alors donner naissance à des ruptures de la gomme par fatigue.

Sur un flanc de pneumatique, une griffure ou coupure, initiée par un objet coupant, se propage généralement suivant une direction oblique. Si la direction d'initiation de la griffure est voisine de cette direction de propagation, la vitesse de propagation de la griffure en longueur et en profondeur est élevée ; au contraire si la direction d'initiation est sensiblement méridienne ou circonférentielle, cette vitesse de propagation est beaucoup moindre. Dans le cas plus désavantageux, l'inventeur a trouvé que les vitesses de propagations étaient fonction du cycle suivi par la somme des contraintes principales (contrainte maximale et contrainte minimale) en extrémités de griffures pendant le trajet suivi par ces extrémités depuis l'entrée dans la surface de contact de pneumatique avec le sol jusqu'à la sortie de cette surface. S considère en un point donné de la face externe de la paroi latérale les déformations méridienne et circonférentielle, la vitesse de propagation est alors sensiblement proportionelle à la somme de ces déformations, intégrée suivant l'angle formé par le plan vertical abaissé de l'axe de rotation sur le sol et par le plan méridien contenant le point considéré, les bornes d'intégration étant les deux valeurs d'angles correspondant à l'entrée et à la sortie du point considéré de l'aire de contact entre le pneumatique et le sol. Réduire ou même annuler les vitesses de propagation consiste à minimiser l'intégrale ci-dessus et une telle réduction peut être obtenue en annulant la déformation méridienne ou mieux encore en rendant cette déformation méridienne négative, pour des charges appliquées au pneumatique comprises entre la charge nominale et 1,5 fois la charge nominale.

La configuration de la face externe de la paroi latérale du pneumatique, telle que revendiquée, permet d'obtenir en tout point de cette face, comprise entre l'extrémité de la bande de roulement et l'extrémité inférieure de la face verticale de la nervure, une déformation méridienne nulle ou négative pendant le trajet du point correspondant au passage dans l'aire de contact, la déformation nulle de référence étant prise sur le pneumatique gonflé et non chargé.

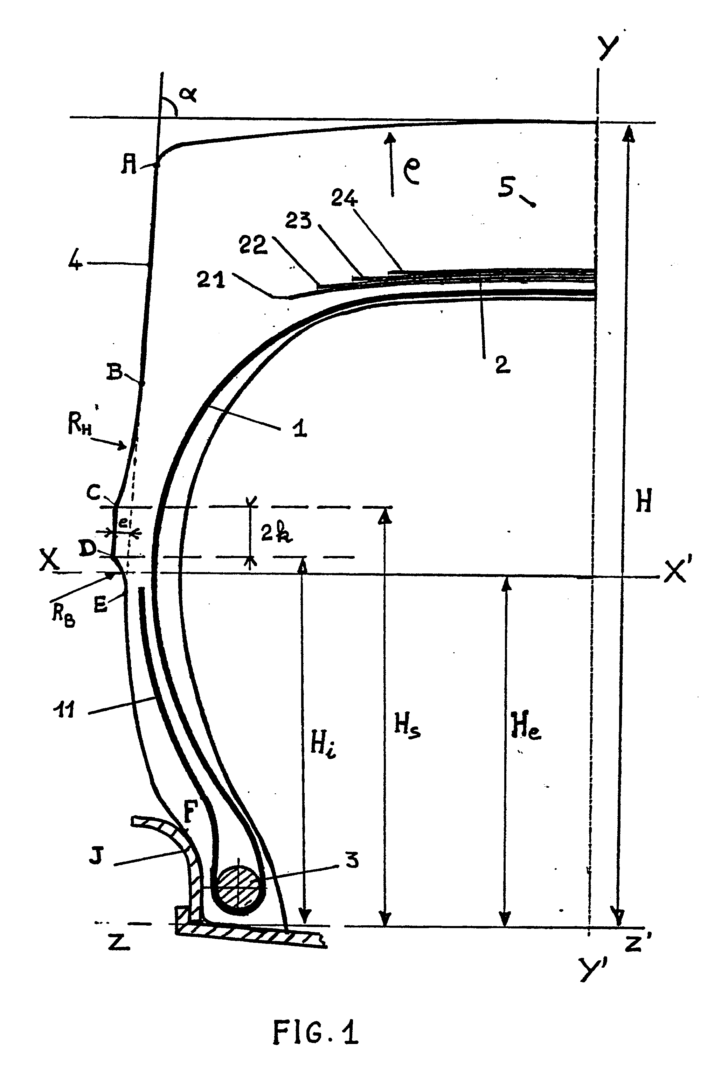

Le dessin annexé, ne comprenant qu'une seule figure, illustre à titre non limitatif un exemple d'exécution de l'invention, décrite dans la suite de la description qui s'y réfère.

La figure unique montre la moitié de la section transversale d'un pneumatique 26.5.25 X conforme à l'invention, l'autre moitié étant symétrique par rapport au plan équatorial YY'.

Le pneumatique, monté sur sa jante de service, de largeur 558,8 mm et de rayon nominal égal à 317,5 mm (axe ZZ'), est gonflé à sa pression nominale et non chargé. Il comprend une armature de carcasse radiale (1), composée d'une seule nappe de câbles métalliques, ancrée à une tringle (3) au moyen du retournement (11). Cette armature de carcasse (1) présente sa largeur axiale maximale à la hauteur $H_E$, mesurée par rapport à l'axe (ZZ') et définissant l'axe (XX') de plus grande largeur axiale.

L'armature de sommet (2) est composée de deux nappes (21, 22) de câbles métalliques de faible extensibilité et de deux nappes (23, 24) de câbles élastiques, les câbles de ces nappes (21, 22, 23, 24) formant avec la direction circonférentielle des angles égaux ou inégaux, mais compris entre 5° et 65°.

La face externe de la paroi latérale (4) du pneumatique a un profil, en partant de l'extrémité (A) de la bande de roulement (5), comportant cinq portions :

a) une portion rectiligne (AB) faisant avec la direction transversale un angle $\alpha$ de 86°,

b) prolongée d'une portion circulaire (BC), tangente en B à la portion (AB) et de rayon $R_H$ égal à 470 mm, puis

c) une portion (CD), parallèle au plan équatorial YY', de longueur 2k égale à 35 mm, soit 0,06 fois la hauteur du pneumatique (H) sur jante, égale à 585 mm, la hauteur $H_i$ de l'extrémité inférieure (D) étant, par rapport à la jante, égale à $H_E$ + 7,5 mm. La nervure protectrice a une forme sensiblement trapézoïdale (BCDE), BE représentant le contour de la paroi latérale en l'absence de nervure protectrice, et l'épaisseur e, mesurée sur l'axe de symétrie de la portion (CD) entre les faces (CD) et (BE) est égale à 0,6k, soit 11 mm.

d) une portion (DE) circulaire de rayon $R_B$ égal à 43 mm,

e) une portion (EF) convexe, aboutissant au point de tangence (F) du profil avec le rebord de la jante (J).

Quant au rayon de courbure méridient ($\rho$) de la surface de la bande de roulement (5), il est égal à 2400 mm, c'est-à-dire très largement supérieur au rayon de courbure circonférential de 896 mm.

Une telle combinaison d e caratéristiques, appliquée à un pneumatique de l'espèce considérée, procure une excellente tenue, aussi bien vis-à-vis de l'initiation des griffures sur le flanc qu'à la tenue à la fatigue des flancs après roulage sous forte charge (1,5 fois la charge nominale, égale à 17 000 daN pour une pression de service de 5,5 bars), les vitesses de propagation des griffures, les plus dangereuses au vu de leur orientation initiale, étant considérablement amoindries, la durée de vie du pneumatique ainsi que l'aspect des flancs étant alors nettement améliorés.

## Revendications

1. Pneumatique hors route, destiné à l' équipement d' engins de chargement, de terrassement et de transport, avec une armature de carcasse radiale (1) ancrée à au moins une tringle (3) dans chaque bourrelet, une armature de sommet (2) formée d'au moins deux nappes (21-24) superposées de câbles parallèles entre eux dans chaque nappe et croisés d' ùne nappe à la suivante en formant avec la direction circonférentielle des angles aigus, et deux parois latérales ou flancs (4) dont l'un au moins est muni d'une nervure protectrice circonférentielle (BCDE), située radialement sensiblement au niveau de la plus grande largeur axiale de l'armature de carcasse, ces flancs (4) étant réunis par une bande de roulement (5), ledit pneumatique lorsqu'il est monté sur sa jante de service (J) gonflé à sa pression nominale et non chargé, présentant, vu en section transversale, les caractéristiques suivantes:

a) la nervure protectrice, ayant épaisseure, a une face axialement externe (CD) rectiligne faisant avec le plan 'équatorial (YY') un angle égal à $0° ± 5°$, et est délimitée radialement par des extrémités supérieure (C) et inférieure (D), respectivement situées par rapport à la jante à des hauteurs $H_s$ et $H_i$,

b) la face rectiligne (CD) de la nervure protectrice est reliée à l'extrémité supérieure (A) du flanc par une première portion circulaire (CB) de rayon $R_H$, prolongée tangentiellement par une deuxieme portion (BA), et est reliée à la face convexe (EF) de la partie inférieure du flanc (4) par une troisième portion circulaire (DE) de rayon $R_B$, caractérisé par les conditions suivantes:

c) $0,05 H < H_s - H_i = 2k < 0,07 H$
avec $H_i$, compris entre $H_e - 0,5k$ et $H_e + 0,5k$
H étant la hauteur du pneumatique sur jante, et $H_e$ la hauteur correspondante à la plus grande largeur axiale de l'armature de carcasse (1);

d) L'épaisseur e est comprise entre 0,5k et k;

e) Le rayon $R_H$ est compris entre 10e et 45e,

f) La troisième portion (BA), est rectiligne et fait avec la direction transversale un angle ($\alpha$) au moins égal à $85°$ ;

g) Le rayon $R_B$ est compris entre e et 4e;

h) La bande de roulement (5) du pneumatique a un rayon de courbure méridien(5) au moins égal à 1,5 fois son rayon de courbure circonférentiel.

2. Pneumatique selon la revendication (1), caractérisé en ce que la hauteur $H_i$ de l'extrémité inférieure (D) est au moins égale à la hauteur $H_e$ correspondant à la plus grande largeur axiale de l'armature de carcasse (1).

3. Pneumatique selon la revendication (2), caractérisé en ce que la bande de roulement (5) est dépourvue de rainures transversales ou obliques débouchant sur la face externe de la paroi latérale (4).

4. Pneumatique selon la revendication (2), caractérisé en ce que la bande de roulement (5) comporte des rainures transversales ou obliques débouchant sur la paroi latérale (4) du flanc et dont la profondeur (p) est au plus égale à la longueur de la portion rectiligne (AB).

## Claims

1. A tire for off-road use on loading, earth-moving and transportation vehicles comprising a radial carcass reinforcement (1) anchored to at least one bead wire (3) in each bead, a crown reinforcement (2) formed of at least two superimposed plies (21-24) of cables parallel to each other in each ply and crossed from one ply to the next forming acute angles with the circumferential direction, two sidewalls (4) , at least one of which is provided with a circumferential protective rib (BCDE) located radially substantially at the level (X-X') of the largest axial width of the carcass reinforcement, a tread (5) connecting said sidewalls, the said tire mounted on its service rim (J) , inflated to its service pressure without load, having, viewed in cross section the following characteristics :

a) the protective rib, with a thickness e, has a linear outer face (CD) forming an angle equal to $0 ± 5°$ with a vertical plane perpendicular to the axis of the tire, and delimited radially by an upper end (C) and a lower end (D) having heights $H_s$ and $H_i$ respectively with respect to the rim

b) the linear outer face (CD) of the protective rib is connected to the upper end (A) of the sidewall by a first circular portion (CB) having a curvature radius ($R_H$), this portion (CB) being extended tangentially by a second portion (BA) and is connected to the convex portion (EF) of the lower part of sidewall (4) by a third circular portion (DE) having a curvature radius ($R_B$) characterized by the fact that

c) $0,05 H < H_s - H_i = 2 k < 0,07 H$, with $H_i$ between $H_e - 0,5 k$, H being the height of the tire, $H_e$ being the height corresponding to the largest axial width of the carcass reinforcement (1), and H, $H_e$, $H_i$ and $H_s$ being measured from the bead seat of the rim

d) the thickness e is between 0,5 k and k

e) the curvature radius ($R_H$) is between 1Oe and 45e

f) the third portion (BA) is linear and forms and angle ($\propto$) at least equal to $85°$ with the axial direction

g) the curvature radius ($R_B$) is between e and 4e

h) the tread (5) of the tire has a transverse radius of curvature (p) at least equal to 1,5 times its circumferential radius of curvature.

2. A tire according to claim 1, characterized by the fact that the height $H_i$ of the lower end (D) is at least equal to the height $H_e$ corresponding to the largest axial width of the carcass reinforcement.

3. A tire according to claim 2, characterized by the fact that the tread is without transverse or oblique grooves opening on the outer face of the sidewall.

4. A tire according to claim 2, characterized by the fact that the tread has transverse or oblique grooves which open on the sidewall and the depth of the grooves is at most equal to the height of the linear portion (AB).

## Ansprüche

1. Geländeluftreifen, der zur Ausrüstung von LastBodenbearbeitungs-und Transportgeräten mit einer radialen Karkassenarmatur (l), die an zumindest einem Kern (3) in jedem Wulst verankert ist, mit einer Scheitelarmatur (2), die aus zumindest zwei Lagen (21-24), die übereinander angeordnet sind und aus untereinander parallelen, von Lage zu Lage gekreuzten, Kabeln bestehen und mit der Umfangsrichtung spitze Winkel einschließen und mit zwei seitlichen Wänden oder Flanken (4), von denen zumindest eine mit einer in Umfangsrichtung verlaufenden Schutzleiste (BCDE) versehen ist, die radial im wesentlichen im Bereich (XX') der größten axialen Breite der Karkassenar-matur angeordnet ist, wobei diese Flanken (4) durch eine Lauffläche (5) verbunden sind, wobei der Luftreifen, wenn er auf seiner Betriebsfelge (J) montiert und auf seinen Nominaldruck aufgeblasen, aber nicht belastet ist, einen Querschnitt aufweist, der die folgenden Punkte erfüllt:

a) die Schutzleiste mit einer Dicke (e) weist eine axial äußere Seite (CD) auf, die geradlinig ist und mit der Äquatorialebene (YY') einen Winkel zwischen $0° + 5°$ bildet und ist radial durch obere Enden (C) und untere Enden (D) begrenzt, die bezüglich der Felge in den Höhen $H_s$ und $H_i$ liegen, 1

b) die geradlinige Seite (CD) der Schutzleiste ist mit dem oberen Ende (A) der Flanke durch einen ersten kreisförmigen Abschnitt (CB) mit dem Radius $R_H$ und einen zweiten Abschnitt (BA), der in tangentialer Richtung daran anschließt, verbunden und ist mit der konvexen Fläche (EF) des unteren Teiles der Flanke (4) durch einen dritten Abschnitt mit Kreisform (DE) mit dem Radius $R_B$ verbunden, gekennzeichnet durch die folgenden Bedingungen

c) $0,05\ H < H_s - H_i = 2\ k < 0,07\ H$ wobei $H_i$ zwischen $H_e - 0,5\ k$ und $H_e + 0,5\ k$ liegt und H 1 die Höhe des Reifens auf der Felge, $H_e$ die Höhe entsprechend der größten axialen Breite der Karkassenarmatur (1) ist und

d) die Breite e liegt zwischen 0,5 k und k;

e) der Radius $R_H$ liegt zwischen 10 e und 45 e;

f) der dritte Abschnitt (BA) ist geradlinig und schließt mit der Querrichtung einen Winkel $(\propto)$ von zumindest $85°$ ein

g) der Radius $R_B$ liegt zwischen e und 4 e;

h) die Lauffläche (5) des Reifens weist einen Meridiankrümmungsradius $(\hat{r})$ von zumindest gleich 1,5 mal dem Umfangskrümmungsradius auf.

2. Luftreifen nach Anspruch 1, dadurch gekennzeichnet, daß die Höhe $H_i$ des unteren Endes (D) zumindest gleich ist der Höhe $H_{e'}$ die der größten axialen Breite der Karkassenarmatur (1) entspricht.

3. Luftreifen nach Anspruch 2, dadurch gekennzeichnet, daß die Lauffläche (5) keine Querrillen oder schräge Rillen aufweist, die von der Außenseite der seitlichen Wand (4) ausgehen.

4. Luftreifen nach Anspruch 2, dadurch gekennzeichnet, daß die Lauffläche (5) Quer- oder Schrägrillen aufweist, die von der Seitenwand (4) der Flanke ausgehen, und deren Tiefe (p) höchstens gleich ist der Länge des geradlinigen Abschnittes (AB).

FIG. 1